(19) **Europäisches Patentamt**
**European Patent Office**
**Office européen des brevets**

(11) **EP 4 694 321 A1**

(12) **EUROPEAN PATENT APPLICATION**
published in accordance with Art. 153(4) EPC

(43) Date of publication:
**11.02.2026 Bulletin 2026/07**

(21) Application number: **24784352.7**

(22) Date of filing: **03.04.2024**

(51) International Patent Classification (IPC):
*H04W 28/26* (2009.01)

(52) Cooperative Patent Classification (CPC):
**H04W 28/26; H04W 72/02; H04W 72/0446;
H04W 72/25; H04W 72/542; H04W 88/06**

(86) International application number:
**PCT/CN2024/085825**

(87) International publication number:
**WO 2024/208270 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 CN 202310348464**

(71) Applicant: **Xi'an Unisoc Technologies Co., Ltd.
Xi'an, Shaanxi 710077 (CN)**

(72) Inventor: **LIU, Haowen
Xi'an, Shaanxi 710077 (CN)**

(74) Representative: **Casalonga
Casalonga & Partners
Bayerstraße 71/73
80335 München (DE)**

(54) **RESOURCE EXCLUSION METHOD AND RELATED APPARATUS**

(57) The present application discloses a method for resources exclusion and a related apparatus. The present application relates to communication, and may be applied to a terminal device including a first communication module and a second communication module. The method includes: determining, by a first communication module of the terminal device, a resource selection window according to a time unit triggering resource selection; and excluding, by the first communication module of the terminal device, a first candidate resource from a candidate resource set corresponding to the resource selection window, wherein the first candidate resource overlaps with a first reserved resource, the first reserved resource being a resource for transmitting control information of a radio access network RAN technology supported by the second communication module. The embodiments of the present application may be employed to avoid resource conflicts and improve communication reliability.

determining, by a first communication module of a terminal device, a resource selection window according to a time unit triggering resource selection — S501

excluding, by the first communication module of the terminal device, a first candidate resource from a candidate resource set corresponding to the resource selection window — S502

FIG.5

EP 4 694 321 A1

**Description**

The present application claims priority to CN Patent Application No. 2023103484640, filed with the China National Intellectual Property Administration on April 3, 2023, and entitled "METHOD FOR RESOURCE EXCLUSION AND RELATED APPARATUS", the entirety of which is incorporated herein by reference.

FIELD OF TECHNOLOGY

The present application relates to communications, and particularly to a method for resource exclusion and a related apparatus.

BACKGROUND

Currently, the 3rd Generation Partnership Project (3GPP) has discussed sidelink (SL) transmission in Release 18, primarily proposing a scheme for coexistence of Long Term Evolution (LTE) and New Radio (NR) Vehicle-to-Everything (V2X). The proposal particularly relates to LTE/NR co-channel coexistence scenarios, i.e. LTE sidelink and NR sidelink may share resources. For terminal devices including both LTE modules and NR modules supported in the study, the LTE modules may sense/transmit LTE transmissions, and the NR modules may sense/transmit NR transmissions. However, since the NR modules may not sense LTE transmissions, transmission conflicts between LTE sidelink and NR sidelink may occur in such LTE/NR co-channel coexistence scenarios.

SUMMARY

Embodiments of the present application provide a method for resource exclusion and a related apparatus, which may avoid resource conflicts between NR sidelink transmissions and LTE sidelink transmissions, thereby improving communication reliability.

In a first aspect, an embodiment of the present application provides a method for resource exclusion, applied to a terminal device including a first communication module and a second communication module. The method comprises:

determining, by the first communication module of the terminal device, a resource selection window according to a time unit triggering resource selection; and

excluding, by the first communication module of the terminal device, a first candidate resource from a candidate resource set corresponding to the resource selection window, wherein the first candidate resource overlaps with a first reserved resource, the first reserved resource being a resource for transmitting control information of a radio access network RAN technology supported by the second communication module.

In the present application, the first communication module may be an NR module, and the second communication module may be an LTE module. The control information of the RAN technology supported by the second communication module may be Sidelink Control Information (SCI) transmitted on a Physical Sidelink Shared Channel (PSSCH). It should be understood that by excluding resources to be used by PSCCH corresponding to LTE periodic transmissions from the candidate resource set determined in resource selection procedure for NR transmissions, the problem of resource conflicts caused by the same resources being used for LTE sidelink transmissions and NR sidelink transmissions due to the resources to be used by PSCCH corresponding to LTE periodic transmissions being selected as candidate resources in resource selection by NR module can be prevented, thereby improving communication reliability.

Optionally, in connection with the first aspect, the first reserved resource being a resource for transmitting control information of a RAN technology supported by the second communication module comprises:

the first reserved resource being a resource for transmitting control information corresponding to a second reserved resource, the second reserved resource being a resource reserved for a transmission sensed by the second communication module; or,

the first reserved resource being a resource for transmitting control information, within a resource pool configured for the RAN technology supported by the second communication module, for transmitting control information.

In the implementation, the first reserved resource may be a resource for transmitting the PSCCH, the second reserved resource may be a resource for transmitting the PSSCH, alternatively the first reserved resource may be any resource within the resource selection window that is available for transmitting control information corresponding to the data of the RAN technology supported by the second communication module.

Optionally, in connection with the first aspect, the first candidate resource overlapping with the first reserved resource comprises:

the first candidate resource overlapping with the first reserved resource, and a first Reference Signal Received Power RSRP measurement value of the first reserved resource being greater than an RSRP threshold.

Optionally, in connection with the first aspect, the first RSRP measurement value is an RSRP measurement value on a Physical Sidelink Shared Channel PSSCH.

In the implementation, since LTE sidelink currently only supports RSRP measurement of Demodulation Reference Signal (DMRS) on the PSSCH and does not support RSRP measurement of DMRS on the PSCCH, the RSRP measurement value on the PSSCH may be used directly as the RSRP measurement value on the PSCCH (i.e., the first RSRP value), which simplifies implementation.

Optionally, in connection with the first aspect, the first RSRP measurement value is an RSRP measurement value obtained after power compensation on an RSRP measurement value on the PSSCH.

In the implementation, the first RSRP measurement value is the RSRP measurement value on the PSSCH of the RAN technology supported by the second communication module. Considering that the actual power on the PSCCH is greater than the power on the PSSCH (due to Power Spectral Density (PSD) boosting for the PSCCH in LTE sidelink), if the RSRP measurement value on the PSSCH is used directly for resource exclusion and the NR sidelink uses candidate resources overlapping with the PSCCH for transmission, both NR sidelink and LTE sidelink would experience high interference, severely impacting transmissions of both LTE sidelink and NR sidelink. Therefore, embodiments of the present application may also perform power compensation on the RSRP measurement value of the PSSCH and use it as the RSRP measurement value on the PSCCH (i.e., the first RSRP value), which simplifies implementation and results in a more accurate first RSRP value.

Optionally, in connection with the first aspect, the first RSRP measurement value satisfies:

$$RSRP_{used} = \alpha\, RSRP_{PSSCH}^{LTE} + X\, dB;$$

wherein, $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain.

Optionally, in connection with the first aspect, the first RSRP measurement value satisfies:

$$RSRP_{used} = RSRP_{PSSCH}^{LTE} + 10\, log_{10}\left(\frac{M_{PSSCH} + 10^{\frac{3}{10}} M_{PSCCH}}{M_{PSCCH} + M_{PSSCH}}\right);$$

wherein $RSRP_{used}$ represents the first RSRP measurement value, $RSRP_{PSSCH}^{LTE}$ represents the RSRP measurement value measured on the PSSCH, $M_{PSSCH}$ represents a number of Physical Resource Blocks PRBs occupied by the PSSCH, and $M_{PSCCH}$ represents a number of PRBs occupied by the PSCCH.

Optionally, in connection with the first aspect, the method further comprises:

receiving, by the first communication module of the terminal device, indication information, the indication information indicating whether to exclude the first candidate resource.

Optionally, in connection with the first aspect, the first candidate resource overlapping with the first reserved resource comprises:

the first candidate resource overlapping with the first reserved resource, and a priority indicated by the control information transmitted on the first reserved resource being lower than a priority of data to be transmitted by the first communication module.

Optionally, in connection with the first aspect, the candidate resource set corresponding to the resource selection window is any one of the following sets:

an initialized candidate resource set; or

a candidate resource set with a third reserved resource excluded from the initialized candidate resource set, the third reserved resource being a resource on a time unit determined within the resource selection window, and the time unit determined within the resource selection window is determined according to a time unit during which the terminal device is unable to receive due to half-duplex; or

a candidate resource set with a third reserved resource and a candidate resource excluded from the initialized candidate resource set, the candidate resource being reserved by other terminal devices supporting the RAN technology supported by the first communication module and having a second RSRP measurement value greater than a second RSRP threshold, the third reserved resource being a resource on a time unit determined within the resource selection window, and the time unit determined within the resource selection window is determined according to a time unit within a resource sensing window of the terminal during which it is unable to receive due to half-duplex.

In the implementation, the second RSRP measurement value is an RSRP measurement value on the PSSCH or the PSCCH of the RAN technology supported by the first communication module.

In a second aspect, an embodiment of the present application provides an apparatus for resource exclusion, applied to a terminal device including a first communication module and a second communication module. The apparatus comprises:

a determination unit for determining a resource selection window according to a time unit triggering resource selection; and
an exclusion unit for excluding a first candidate resource from a candidate resource set corresponding to the resource selection window, wherein the first candidate resource overlaps with a first reserved resource, the first reserved resource being a resource for transmitting control information of a RAN technology supported by the second communication module.

Optionally, in connection with the second aspect, the first reserved resource being a resource for transmitting control information of a RAN technology supported by the second communication module comprises:

the first reserved resource being a resource for transmitting control information corresponding to a second reserved resource, the second reserved resource being a resource reserved for a transmission sensed by the second communication module; or,
the first reserved resource being a resource, within a resource pool configured for the RAN technology supported by the second communication module, for transmitting control information.

Optionally, in connection with the second aspect, the first candidate resource overlapping with the first reserved resource comprises:
the first candidate resource overlapping with the first reserved resource, and a first Reference Signal Received Power RSRP measurement value of the first reserved resource being greater than an RSRP threshold.

Optionally, in connection with the second aspect, the first RSRP measurement value is an RSRP measurement value on a Physical Sidelink Shared Channel PSSCH.

Optionally, in connection with the second aspect, the first RSRP measurement value is an RSRP measurement value obtained after power compensation on an RSRP measurement value on the PSSCH.

Optionally, in connection with the second aspect, the first RSRP measurement value satisfies:

$$RSRP_{used} = \alpha\, RSRP_{PSSCH}^{LTE} + X\, dB \;\; ;$$

wherein, $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain.

Optionally, in connection with the second aspect, the first RSRP measurement value satisfies:

$$RSRP_{used} = RSRP_{PSSCH}^{LTE} + 10\, log_{10} \left( \frac{M_{PSSCH} + 10^{\frac{3}{10}} M_{PSCCH}}{M_{PSCCH} + M_{PSSCH}} \right);$$

wherein $RSRP_{used}$ represents the first RSRP measurement value, $RSRP_{PSSCH}^{LTE}$ represents the RSRP measurement value measured on the PSSCH, $M_{PSSCH}$ represents a number of Physical Resource Blocks PRBs occupied by the PSSCH, and $M_{PSCCH}$ represents a number of PRBs occupied by the PSCCH.

Optionally, in connection with the second aspect, the apparatus further comprises a transceiver unit, and the transceiver unit is configured to:
receive indication information, the indication information indicating whether to exclude the first candidate resource.

Optionally, in connection with the second aspect, the first candidate resource overlapping with the first reserved resource comprises:
the first candidate resource overlapping with the first reserved resource, and a priority indicated by the control information transmitted on the first reserved resource being lower than a priority of data to be transmitted by the first communication module.

Optionally, in connection with the second aspect, the candidate resource set corresponding to the resource selection window is any one of the following sets:

an initialized candidate resource set; or

a candidate resource set with a third reserved resource excluded from the initialized candidate resource set, the third reserved resource being a resource on a time unit determined within the resource selection window, and the time unit determined within the resource selection window is determined according to a time unit during which the terminal device is unable to receive due to half-duplex; or

a candidate resource set with a third reserved resource and a candidate resource excluded from the initialized candidate resource set, the candidate resource being reserved by other terminal devices supporting the RAN technology supported by the first communication module and having a second RSRP measurement value greater than a second RSRP threshold, the third reserved resource being a resource on a time unit determined within the resource selection window, and the time unit determined within the resource selection window is determined according to a time unit within a resource sensing window of the terminal during which it is unable to receive due to half-duplex.

In a third aspect, a chip is provided, including a processor and a communication interface, wherein the processor is configured to cause the chip to perform the method according to any one of the first aspect above.

In a fourth aspect, a chip module is provided, comprising a communication interface, a power module, a storage module, and a chip, wherein: the power module is configured to provide power for the chip module; the storage module is configured to store data and instructions; the communication interface is configured for internal communication within the chip module, or for communication between the chip module and external devices; the chip is configured to perform the method according to any one of the first aspect above.

In a fifth aspect, a communication apparatus is provided, including a memory and a processor, wherein the memory stores computer programs, the computer programs including program instructions, and the processor is configured to invoke the program instructions to cause the communication apparatus to perform the method according to any one of the first aspect above.

In a sixth aspect, a computer-readable storage medium is provided, having computer-readable instructions stored thereon, wherein the computer-readable instructions, when being executed on a communication apparatus, cause the communication apparatus to perform the method according to any one of the first aspect above.

In a seventh aspect, a computer program or a computer program product is provided, including code or instructions, wherein the code or instructions, when being executed on a computer, cause the computer to perform the method according to any one of the first aspect above.

## BRIEF DESCRIPTION OF THE DRAWINGS

FIG. 1 is a schematic architecture diagram of a communication system provided by an embodiment of the present application;

FIG. 2 is a schematic structure diagram of a resource pool of an LTE sidelink provided by an embodiment of the present application;

FIG. 3 is a schematic diagram of a scenario for resource selection provided by an embodiment of the present application;

FIG. 4 is a schematic diagram of a terminal device including dual modules provided by an embodiment of the present application;

FIG. 5 is a schematic flowchart of a method for resource exclusion provided by an embodiment of the present application;

FIG. 6 is a schematic diagram of a scenario for resource selection provided by an embodiment of the present application;

FIG. 7 is a schematic structural diagram of a communication apparatus provided by an embodiment of the present application;

FIG. 8 is a schematic structural diagram of another communication apparatus provided by an embodiment of the present application;

FIG. 9 is a schematic structural diagram of a module device provided by an embodiment of the present application.

## DETAILED DESCRIPTION

The technical solutions in the embodiments of the present application will be described clearly and completely below in connection with the drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

The terms in the following embodiments of the present application are for the purpose of describing specific embodiments only and are not intended to limit the present application. As used in the specification and appended claims of the present application, the singular forms "a", "an", "the", "said", "that", and "this" are intended to include the plural forms as well, unless it is explicitly indicated otherwise. It should also be understood that the term "and/or" used in the present application is merely a description of relations of related objects, indicating three types of relations. For example, "A and/or B" may indicate: A alone, B alone, and both A and B, where A and B may be singular or plural. The character "/" indicates an "or" relation between the two objects before and after the character.

It should be noted that the terms "first", "second", "third", etc. in the specification and claims and the above drawings of the present application are used to distinguish similar objects and do not indicate a specific sequence or order. It should be understood that the data described in such a manner may be interchanged under appropriate circumstances so that the embodiments of the present application described herein may be implemented in sequences other than those illustrated or described herein. Furthermore, the terms "comprise/include" and any variations thereof are intended to cover non-exclusive inclusion. For example, processes, methods, systems, products, or servers that comprise/include a series of steps or units are not limited to those clearly listed steps or units, but may include other steps or units not clearly listed or inherent to these processes, methods, products, or devices. Furthermore, "at least one of" refers to one or more, and "a plurality of" refers to two or more.

For a better understanding of the embodiments of the present application, the system architecture involved in the embodiments of the present application is first introduced.

The technical solutions of the embodiments of the present application may be applied to various communication systems, for example: LTE Frequency Division Duplex (FDD) systems, LTE Time Division Duplex (TDD) systems, 5G systems, Vehicle-to-Everything (V2X), where V2X may include Vehicle-to-Network (V2N), Vehicle-to-Vehicle (V2V), Vehicle-to-Infrastructure (V2I), Vehicle-to-Pedestrian (V2P), etc., Long Term Evolution-Vehicle (LTE-V), Internet of Vehicles, Machine Type Communication (MTC), Internet of Things (IoT), Long Term Evolution-Machine (LTE-M), Machine-to-Machine (M2M), Device-to-Device (D2D), or future evolved communication systems, such as the sixth generation (6G) system, etc.

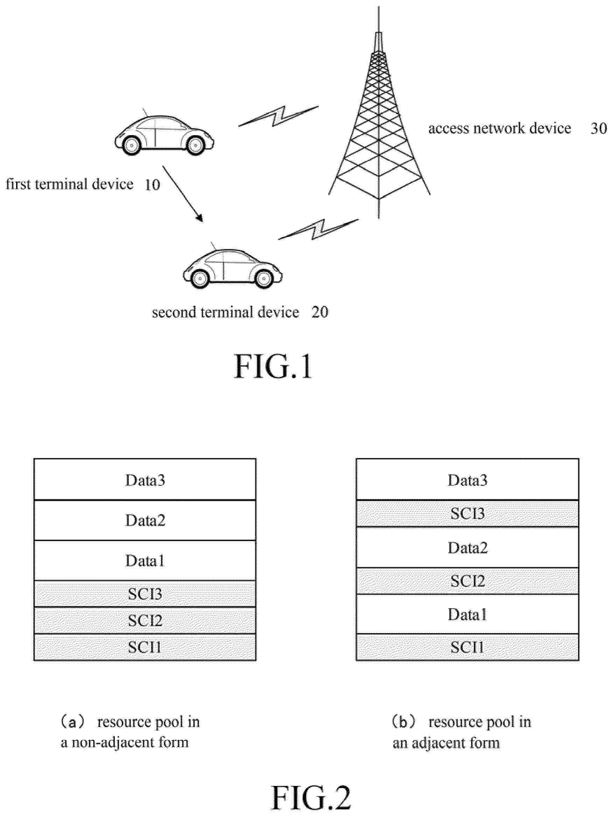

Referring to FIG.1, FIG. 1 is a schematic architecture diagram of a communication system provided by an embodiment of the present application. As shown in FIG. 1, the communication system may include a first terminal device 10 and a second terminal device 20 that performs SL communication with the first terminal device 10. FIG. 1 is only a schematic diagram, not constituting any limitation on the application scenarios of the technical solutions provided by the present application.

The first terminal device 10 and the second terminal device 20 are entities on the user side for receiving signals, or transmitting signals, or receiving and transmitting signals. The first terminal device 10 and the second terminal device 20 provide users with one or more of voice service and data connectivity service. The first terminal device 10 and the second terminal device 20 may be devices that include wireless transceiver functions and may cooperate with access network devices to provide communication services for users. Specifically, the first terminal device 10 and the second terminal device 20 may refer to User Equipments (UEs), access terminals, subscriber units, subscriber stations, mobile stations, mobile platforms, remote stations, remote terminals, mobile devices, terminals, wireless communication devices, user agents, user apparatuses, or Road Side Units (RSUs). The first terminal device 10 and the second terminal device 20 may also be drones, Internet of Things (IoT) devices, stations (STs) in WLAN, cellular phones, smart phones, cordless phones, wireless data cards, tablet computers, Session Initiation Protocol (SIP) phones, Wireless Local Loop (WLL) stations, Personal Digital Assistants (PDAs), laptop computers, Machine Type Communication (MTC) terminals, handheld devices with wireless communication functions, computing devices, or other processing devices connected to wireless modems, vehicle-mounted devices, wearable devices (also called wearable smart devices), Virtual Reality (VR) terminals, Augmented Reality (AR) terminals, wireless terminals in industrial control, wireless terminals in self-driving, wireless terminals in remote medical, wireless terminals in smart grids, wireless terminals in transportation safety, wireless terminals in smart cities, wireless terminals in smart homes, etc. The first terminal device 10 and the second terminal device 20 may also be Device-to-Device (D2D) devices, such as electricity meters, water meters, etc. The first terminal device 10 and the second terminal device 20 may also be terminals in 5G systems or terminals in next-generation communication systems, which is not limited in the embodiments of the present application.

It should be understood that the first terminal device 10 may also perform SL communication with terminal devices other than the second terminal device 20, and the second terminal device 20 may also perform SL communication with terminal devices other than the first terminal device 10, which is not limited herein.

Optionally, the communication system may also include one or more access network devices 30 (only one is shown). In the present application, the first terminal device 10 and the second terminal device 20 may be located within the coverage of a same access network device; or the first terminal device 10 and the second terminal device 20 may be located within the coverage of different access network devices; or the first terminal device 10 is within the coverage of an access network device, and the second terminal device 20 is out of coverage of the access network device; or the first terminal device 10 is out of coverage of an access network device, and the second terminal device 20 is within the coverage of the access network device; or both the first terminal device 10 and the second terminal device 20 are out of coverage of an access network device, which is not limited herein.

The access network device 30 is an entity on the network side for transmitting signals, or receiving signals, or transmitting and receiving signals. The access network device 30 may be an apparatus deployed in a Radio Access Network (RAN) to provide wireless communication functions for the first terminal device 10 and the second terminal device 20, for example, it may be a Transmission Reception Point (TRP), a base station, or various forms of control nodes. For example, a network controller, a wireless controller, a wireless controller in a Cloud Radio Access Network (CRAN) scenario, etc. Specifically, the access network device may be various forms of macro base stations, micro base stations (also called small cells), relay stations, Access Points (APs), Radio Network Controllers (RNCs), Node Bs (NBs), Base Station Controllers (BSCs), Base Transceiver Stations (BTSs), home base stations (e.g., Home Evolved NodeB, or Home Node B, HNB), BaseBand Units (BBUs), Transmitting and Receiving Points (TRPs), Transmitting Points (TPs), Mobile Switching Centers, etc., or may be antenna panels of a base station. A control node may be connected to multiple base stations and configure resources for multiple terminals under the coverage of the multiple base stations. In systems using different radio access technologies, the names of devices having base station functions may vary. For example, it may be an evolved Node B (eNB or eNodeB) in an LTE system, or a wireless controller in a Cloud Radio Access Network (CRAN) scenario, or a gNB in 5G, or the access network device 30 may be a relay station, an access point, a vehicle-mounted device, a wearable device, a network-side device in a network beyond 5G, or an access network device in a future evolved PLMN network, etc. The present application does not limit the specific name of the access network device.

Some terms in the present application are explained below for the understanding of those skilled in the art.

1. A resource pool in an adjacent form and a resource pool in a non-adjacent form for LTE sidelink

In a resource pool in a non-adjacent form, the control channel (e.g., Physical Sidelink Control Channel (PSCCH)) and the data channel (e.g., Physical Sidelink Shared Channel (PSSCH)) are not adjacent. Resources used by the control channels are located in a lower frequency range of the resource pool, while resources used by the data channels are located in a higher frequency range part of the resource pool, as shown at (a) in FIG. 2. There is a correspondence between the resources used by the control channel and the data channel. As shown at (a) in FIG. 2, Sidelink Control Information (SCI)1 corresponds to Data1, SCI2 corresponds to Data2, and SCI3 corresponds to Data3. In another resource pool in an adjacent form, as shown at (b) in FIG. 2, the control channel and the data channel are adjacent. During resource allocation, the resources occupied by the PSCCH and the PSSCH are collectively considered as one candidate resource.

2. Sidelink (SL)

SL is defined by direct communication between a terminal device and another terminal devices. That is, a link where a terminal device communicate directly with a another terminal device without forwarding by a base station.

3. Sensing and Resource Selection

R16 NR V2X supports not only a resource allocation mode (mode 1) which is based on scheduling but also a resource allocation mode (mode 2) where the terminal autonomously selects resources.

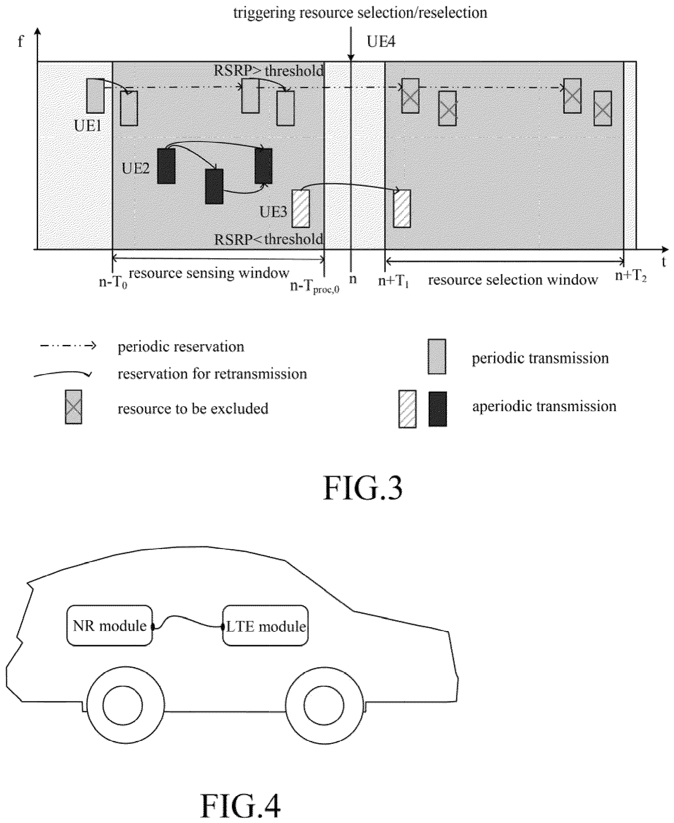

Mode 2 is a mechanism of resource selection which is based on sensing. For sensing and resource selection procedure, the granularity in time domain is a slot, and the granularity in frequency domain is a sub-channel. A UE operating in mode 2 has been sensing all the time. When a resource selection procedure is triggered, the physical layer of the UE determines resource occupancy for a time period in the future (a resource selection window) based on the sensing in a previous time period (a resource sensing window), excludes resources unavailable for the resource selection window, and finally establishes a candidate resource set and reports it to the Media Access Control (MAC) layer. The MAC layer selects resources for transmission from the candidate resource set according to constraints on resource selection. As shown in FIG. 3, assuming UE4 triggers a resource selection procedure at time n, at this time it will determine the resource reservation within the resource selection window based on transmissions sensed within the resource sensing window, and will perform the exclusion. Specifically, as shown in FIG. 3, assuming UE4 senses a transmission from UE1, which has periodic resource reservations. Further, UE4 has to compare the RSRP of the sensed transmission from UE1 with an RSRP threshold. If the RSRP of UE1 is greater than the RSRP threshold, corresponding candidate resource should be excluded, i.e., the candidate resource reserved by another UE having a RSRP measurement value higher than the threshold should be excluded. Similarly, for the sensed transmissions from UE2 and UE3, which have resources reserved for retransmission, as shown in FIG. 3. Since the RSRP of UE3 is less than the RSRP threshold, the candidate resource corresponding to UE3 shall not be excluded.

It should be noted that currently, 3GPP R18 has discussed SL transmissions, primarily proposing a scheme for coexistence of LTE and NR V2X. The proposal particularly relates to LTE/NR co-channel coexistence scenarios, i.e. LTE sidelink and NR sidelink share part of the resources, which is shown in FIG. 4 as a schematic diagram of a terminal device including dual modules. The LTE module may sense/transmit LTE transmissions, and the NR module may sense/transmit NR transmissions. However, in such LTE/NR co-channel coexistence scenarios, if the NR sidelink module is not aware of the resources for LTE sidelink transmission or resources reserved for LTE sidelink, it may select partially overlapping resources for transmission, thereby causing resource conflicts.

Based on this, embodiments of the present application provide a method for resource exclusion, which is able to avoid resource conflicts and improve communication reliability.

Provided below is a detailed description of the method, apparatus, chip, and chip module for resource exclusion provided by the embodiments of the present application.

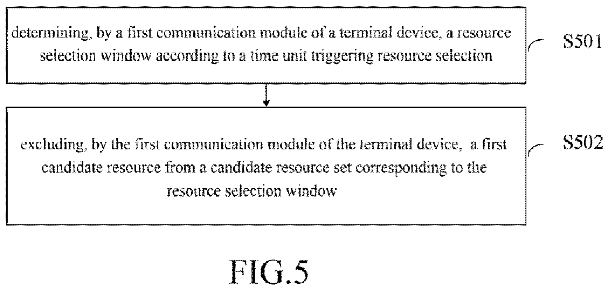

Referring to FIG.5, FIG. 5 is a schematic flowchart of a method for resource exclusion provided by an embodiment of the present application. It should be noted that the embodiment of the present application may be applied to a terminal device supporting multiple modules, for example, dual modules (such as a first communication module and a second communication module), and the first communication module and the second communication module may share resources. For example, the terminal device may support dual modules for LTE sidelink and NR sidelink, where the LTE sidelink is configured with a resource pool in a non-adjacent form of PSCCH and PSSCH on a carrier supporting the coexistence of NR sidelink and LTE sidelink, and the NR sidelink is configured with a resource pool that overlaps with the resource pool in a non-adjacent form. As shown in FIG. 5, the method for resource exclusion includes the following steps S501 to S502:

S501, determining, by a first communication module of a terminal device, a resource selection window according to a time unit triggering resource selection.

For example, the first communication module of the terminal device may be an NR module. The time unit is the granularity in form of a time unit for communications between the first terminal device and the second terminal device. The time unit may be a slot, a subframe, a mini-slot, etc., which is not limited herein. According to a time unit, n, triggering resource selection, the resource selection window is determined as $[n+T_1, n+T_2]$. Where, $T1 \leq T_{proc,1}$, and it should be understood that $T_{proc,1}$ is time for processing such as resource selection and data preparation, etc., which is configured as a number of slots selected from {3, 5, 9, 17} for a sub-carrier spacing (SCS) selected from {15, 30, 60, 120} kHz, respectively. Where, $T_{2min} \leq T_2 \leq$ Remaining PDB, here PDB is the abbreviation for remaining Packet Delay Budget. It should be understood that $T_{2min}$ is configured, by higher layers based on the priority, selected from $\{1, 5, 10, 20\}*2^\mu$, where $\mu$=0, 1, 2, 3 corresponding to SCS selected from {15, 30, 60, 120} kHz respectively.

S502, excluding, by the first communication module of the terminal device, a first candidate resource from a candidate resource set corresponding to the resource selection window.

It should be noted that in the embodiments of the present application, the candidate resource in the candidate resource set corresponding to the resource selection window is used for transmitting data of the first communication module. For example, the candidate resource set may be any one of the following sets:

1. an initialized candidate resource set, i.e., a collection of all candidate resources within the resource selection window.

2. a candidate resource set with a third reserved resource excluded from the initialized candidate resource set, the third reserved resource being a resource on a time unit determined within the resource selection window, the time unit determined within the resource selection window being determined according to a time unit during which the terminal device is unable to receive due to half-duplex. Here, the initialized candidate resource set is a collection of all candidate resources within the resource selection window.

3. a candidate resource set with a third reserved resource and a candidate resource excluded from the initialized candidate resource set, the candidate resource being reserved by other terminal devices supporting the RAN technology supported by the first communication module and having a second RSRP measurement value greater than a second RSRP threshold, the third reserved resource being a resource on a time unit determined within the resource selection window, and the time unit determined within the resource selection window is determined according to a time unit within a resource sensing window of the terminal during which it is unable to receive due to half-duplex. Here, the initialized candidate resource set is a collection of all candidate resources within the resource selection window. It should be understood that the second RSRP measurement value is an RSRP measurement value on the PSSCH or the PSCCH of the RAN technology supported by the first communication module.

It should be understood that the candidate resource set corresponding to the resource selection window includes one or more candidate resources, where the candidate resource excluded from the candidate resource set corresponding to the resource selection window is the first candidate resource, and the excluded candidate resource (i.e., the first candidate resource) overlaps with a first reserved resource. Here, the first candidate resource overlapping with the first reserved resource may be interpreted as the first candidate resource partially or completely overlapping with the first reserved resource. It should be understood that the first reserved resource is a resource for transmitting control information of a RAN technology supported by the second communication module. For example, the second communication module may be an LTE module, where the RAN technology supported by the LTE module may be understood as the LTE. Correspondingly, the RAN technology supported by the NR module may be understood as the NR. Optionally, the control information transmitted by the RAN technology supported by the second communication module may be PSCCH (or SCI), etc.

It should be noted that to avoid, as much as possible, conflicts between the resources selected by the NR module for transmission and LTE transmissions, the LTE module may provide assistance information to the NR module. The assistance information is used for resource selection by the NR module. It should be understood that the existing assistance information includes information about resources reserved by other LTE UEs sensed by the LTE module. Here, the resources reserved by other LTE UEs are resources used by other LTE UEs for PSSCH transmissions. It should be understood that the first reserved resource in the embodiments of the present application may be the location of the PSCCH in time domain and in frequency domain inferred by the NR module according to the information regarding resources reserved by other LTE UEs contained in the assistance information transmitted by the LTE module. Optionally, the assistance information transmitted by the LTE module includes the location of the PSCCH in time domain and in frequency domain directly, i.e., the first reserved resource.

For example, when the first communication module is an NR module, the second communication module is an LTE module, and they are used for SL transmissions, "excluding, by the first communication module of the terminal device, a first candidate resource from a candidate resource set corresponding to the resource selection window, wherein the first candidate resource overlaps with a first reserved resource, the first reserved resource being a resource for transmitting control information of a RAN technology supported by the second communication module" in an embodiment of the present application may also be interpreted as: for NR SL transmissions that periodically reserve resources, the physical layer of the NR module further excludes some of the candidate resource (i.e., the first candidate resource) that overlaps with the resource (i.e., the first reserved resource) to be used by the PSCCH corresponding to periodically reserved resources of other LTE sidelink UEs in the assistance information transmitted by the LTE module.

It should be understood that in an implementation, the first reserved resource being a resource for transmitting control information of a RAN technology supported by the second communication module may be interpreted as: the first reserved resource being a resource for transmitting control information corresponding to a second reserved resource, the second reserved resource being a resource reserved for a transmission sensed by the second communication module (e.g., the LTE module). Optionally, in another implementation, the first reserved resource being a resource for transmitting control information of a RAN technology supported by the second communication module may be interpreted as: the first reserved resource being a resource, within a resource pool configured for the RAN technology supported by the second communication module, for transmitting control information, i.e., the first reserved resource being any resource within the resource selection window that is available for transmitting control information corresponding to the data of the RAN technology supported by the second communication module. The resource pool may be a resource pool for LTE sidelink in a non-adjacent form.

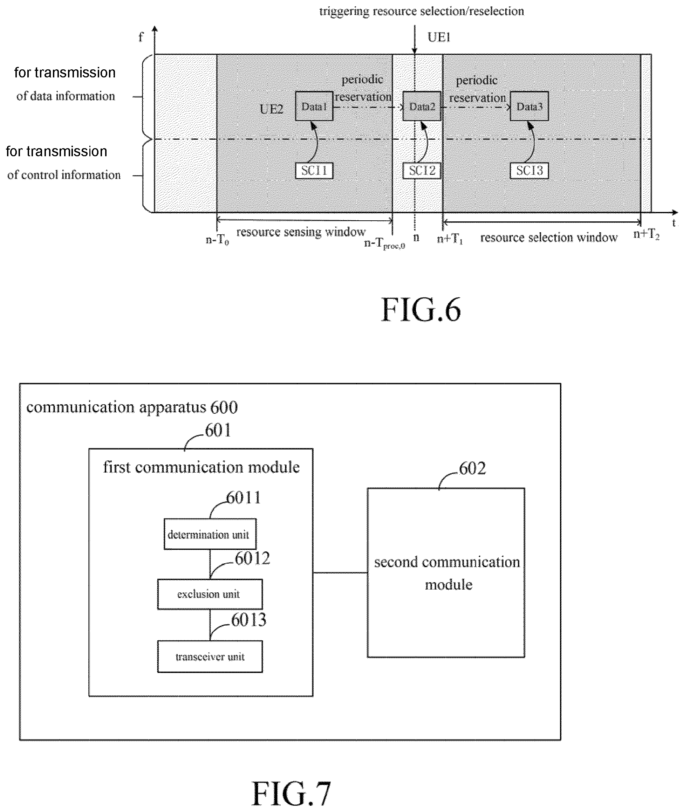

For example, referring to FIG. 6, FIG. 6 is a schematic diagram of a scenario for resource selection provided by an embodiment of the present application. As shown in FIG. 6, in the resource pool configured for the RAN technology supported by the second communication module, the resources used by control channels are located in a lower frequency range of the resource pool, while the resources used by data channels are located in a higher frequency range. Assuming that the resource pool configured for the RAN technology supported by the second communication module includes SCI1, SCI2, SCI3, Data1, Data2, and Data3, where SCI1 corresponds to Data1, SCI2 corresponds to Data2, and SCI3 corresponds to Data3. UE1 triggers resource selection/reselection at a time unit n. In an implementation, the first reserved resource is the resource for transmitting control information corresponding to a second reserved resource, and the second reserved resource is the resource reserved for a transmission sensed by the second communication module. Assuming that the first reserved resource is the resource corresponding to SCI3, then the second reserved resource is the resource corresponding to Data3. Optionally, in another implementation, if the first reserved resource is the resource for transmitting control information within the resource pool configured for the RAN technology supported by the second communication module, then the first reserved resource is the resource for transmitting control information in FIG. 6, i.e., the resource located in the lower frequency range part of the resource pool.

In some embodiments, the first communication module of the terminal device may also determine whether to exclude the first candidate resource based on configuration. That is, the first communication module of the terminal device may receive indication information, the indication information indicating whether to exclude the first candidate resource.

For example, the indication information may be one bit in length. When the value of the one bit is 1, it indicates to exclude the first candidate resource (i.e., to exclude a candidate resource overlapping with the first reserved resource), and when the value of the one bit is 0, it indicates not to exclude the first candidate resource. Optionally, the first communication module of the terminal device may also determine whether to exclude the first candidate resource based on information pre-defined or pre-configured in protocol, which is not limited in the present application.

In some embodiments, in addition to the first reserved resource overlapping with the first candidate resource, a first Reference Signal Received Power (RSRP) measurement value of the first reserved resource has to be greater than an RSRP threshold. That is, the first candidate resource overlapping with the first reserved resource comprises: the first candidate resource overlapping with the first reserved resource, and the first RSRP measurement value of the first reserved resource being greater than the RSRP threshold.

It should be understood that in an implementation, the first RSRP measurement value may be an RSRP measurement value on the PSSCH, i.e., the first RSRP measurement value is the RSRP measurement value of the PSSCH of the RAN technology supported by the second communication module. Here, the PSSCH is the PSSCH (i.e., data information) transmitted on the resources of the transmission sensed by the LTE module. The SCI/PSCCH (i.e., control information) corresponding to the PSSCH indicates the resources to be used for subsequent periodic transmissions of the PSSCH, where the resource, within the resource selection window, to be used by the PSCCH corresponding to the resources to be used for the subsequent periodic transmissions of the PSSCH, is the first reserved resource.

As an example and with reference to FIG. 6, in the scenario shown in FIG. 6, the first RSRP measurement value is the RSRP measurement value on Data1, i.e., the PSSCH is Data1. The SCI/PSCCH (i.e., control information) corresponding to the PSSCH is SCI1. SCI1 indicates the resources to be used for subsequent periodic transmissions of the PSSCH, i.e., indicates the resources to be used by Data2 and Data3. The resource, within the resource selection window, to be used for the subsequent periodic transmissions of the PSSCH, is Data3. The resource to be used by the PSCCH corresponding to Data3 is SCI3, i.e., the first reserved resource is SCI3.

Optionally, in another implementation, the first RSRP measurement value is an RSRP measurement value obtained after power compensation on the RSRP measurement value on the PSSCH. For example, the compensation may be implemented in two ways as follows:

(1) the first RSRP measurement value satisfies:

$$RSRP_{used} = \alpha \, RSRP_{PSSCH}^{LTE} + X \, dB;$$

where $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain. Where $\alpha$ and X may be used simultaneously, or either one may be used, which is not limited herein. Here, $\alpha$ and X may be configured by higher layers, or pre-defined in protocol, or pre-configured, which is not limited herein.

(2) the first RSRP measurement value satisfies:

$$RSRP_{used} = RSRP_{PSSCH}^{LTE} + 10 \, log_{10}\left(\frac{M_{PSSCH} + 10^{\frac{3}{10}} M_{PSCCH}}{M_{PSCCH} + M_{PSSCH}}\right);$$

where $RSRP_{used}$ represents the first RSRP measurement value, $RSRP_{PSSCH}^{LTE}$ represents the RSRP measurement value measured on the PSSCH, $M_{PSSCH}$ represents a number of Physical Resource Blocks PRBs occupied by the PSSCH, and $M_{PSCCH}$ represents a number of PRBs occupied by the PSCCH. Here, $M_{PSSCH}$ is the number of PRBs used by the PSSCH of the currently sensed transmission, and $M_{PSCCH}$ is the number of PRBs used by the PSCCH of the currently sensed transmission.

For example, when the first communication module is an NR module, the second communication module is an LTE module, and they are used for SL transmissions, "excluding, by the first communication module of the terminal device, a first candidate resource from a candidate resource set corresponding to the resource selection window, wherein the first candidate resource overlaps with a first reserved resource, and the first RSRP measurement value of the first reserved resource is greater than an RSRP threshold, the first reserved resource being a resource for transmitting control information of a RAN technology supported by the second communication module" in an embodiment of the present application may also be interpreted as: for NR SL transmissions that periodically reserve resources, the physical layer of the NR module further excludes some of the candidate resource (i.e., the first candidate resource) that overlaps with the resource (i.e., the first reserved resource) to be used by the PSCCH corresponding to periodically reserved resources of other LTE sidelink UEs in the assistance information transmitted by the LTE module, and the RSRP measurement value of the first reserved resource periodically reserved by the LTE sidelink is greater than the RSRP threshold.

In some embodiments, in addition to the first reserved resource overlapping with the first candidate resource, the priority indicated by the control information transmitted on the first reserved resource may also be lower than the priority of the data to be transmitted by the first communication module. That is, the first candidate resource overlapping with the first reserved resource comprises: the first candidate resource overlapping with the first reserved resource, and a priority indicated by the control information transmitted on the first reserved resource being lower than a priority of data to be transmitted by the first communication module. It should be understood that the data to be transmitted by the first communication module is the data to be transmitted for the resource selection.

For example, when the first communication module is an NR module, the second communication module is an LTE module, and they are used for SL transmissions, "excluding, by the first communication module of the terminal device, a first candidate resource from a candidate resource set corresponding to the resource selection window, wherein the first candidate resource overlaps with a first reserved resource, and the priority indicated by the control information transmitted on the first reserved resource is lower than the priority of the data to be transmitted by the first communication module" in an embodiment of the present application may also be interpreted as: for NR SL transmissions that periodically reserve resources, the physical layer of the NR SL module further excludes some of the candidate resource that overlaps with the resource (i.e., the first reserved resources) to be used by the PSCCH corresponding to periodically reserved resources of other LTE sidelink UEs in the assistance information transmitted by the LTE module, and the priority of the data to be transmitted on the first reserved resource by the LTE module is lower than the priority of the data to be transmitted by the NR module.

In the embodiments of the present application, by excluding resources to be used by the PSCCH corresponding to LTE periodic transmissions from the candidate resource set determined in resource selection procedure for NR transmissions, the problem of resource conflicts caused by the same resources being used for LTE sidelink transmissions and NR sidelink transmissions due to the resources to be used by PSCCH corresponding to LTE periodic transmissions being selected as candidate resources in resource selection by NR module can be prevented, thereby improving communication reliability.

Referring to FIG.7, FIG. 7 is a schematic structure diagram of a communication apparatus provided by an embodiment of the present application. The communication apparatus may also be interpreted as an apparatus for resource exclusion. The communication apparatus may be a terminal device or a device having the functionality of a terminal device (e.g., a chip). In an implementation, the communication apparatus may include a first communication module and a second communication module. Optionally, the communication apparatus may further include a determination unit, an exclusion unit, and a transceiver unit. In another implementation, as shown in FIG. 7, the communication apparatus 600 may include a first communication module 601 and a second communication module 602, and the first communication module 601 includes a determination unit 6011 and an exclusion unit 6012, where:

The determination unit 6011 is configured to determine a resource selection window based on a time unit triggering resource selection;

The exclusion unit 6012 is configured to exclude a first candidate resource from a candidate resource set corresponding to the resource selection window, wherein the first candidate resource overlaps with a first reserved resource, the first reserved resource being a resource for transmitting control information of a RAN technology supported by the second communication module.

Optionally, the first reserved resource being a resource for transmitting control information of a RAN technology supported by the second communication module comprises:

the first reserved resource being a resource, sensed by the second communication module, for transmitting control information; or
the first reserved resource being a resource, within a resource pool configured for the RAN technology supported by the second communication module, for transmitting control information.

Optionally, the first candidate resource overlapping with the first reserved resource comprises:
the first candidate resource overlapping with the first reserved resource, and a first RSRP measurement value of the first reserved resource being greater than an RSRP threshold.

Optionally, the first RSRP measurement value is an RSRP measurement value on a physical sidelink shared channel PSSCH.

Optionally, the first RSRP measurement value is an RSRP measurement value obtained after power compensation on an RSRP measurement value on a PSSCH.

**EP 4 694 321 A1**

Optionally, the first RSRP measurement value satisfies:

$$RSRP_{used} = \alpha\, RSRP_{PSSCH}^{LTE} + X\, dB\ ;$$

wherein, $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain.

Optionally, the first RSRP measurement value satisfies:

$$RSRP_{used} = RSRP_{PSSCH}^{LTE} + 10\, log_{10}\left(\frac{M_{PSSCH} + 10^{\frac{3}{10}} M_{PSCCH}}{M_{PSCCH} + M_{PSSCH}}\right);$$

wherein $RSRP_{used}$ represents the first RSRP measurement value, $RSRP_{PSSCH}^{LTE}$ represents the RSRP measurement value measured on the PSSCH, $M_{PSSCH}$ represents a number of physical resource blocks PRBs occupied by the PSSCH, and $M_{PSCCH}$ represents a number of PRBs occupied by the PSCCH.

Optionally, the first communication module further includes a transceiver unit 6013, and the transceiver unit 6013 is configured to:

receive indication information, the indication information indicating whether to exclude the first candidate resource.

Optionally, the first candidate resource overlapping with the first reserved resource comprises:

the first candidate resource overlapping with the first reserved resource, and a priority indicated by the control information transmitted on the first reserved resource being lower than a priority of data to be transmitted by the first communication module.

Optionally, the candidate resource set corresponding to the resource selection window is any one of the following sets:

an initialized candidate resource set; or

a candidate resource set with a third reserved resource excluded from the initialized candidate resource set, the third reserved resource being a resource on a time unit determined within the resource selection window, and the time unit determined within the resource selection window is determined according to a time unit during which the terminal device is unable to receive due to half-duplex; or

a candidate resource set with a third reserved resource and a candidate resource excluded from the initialized candidate resource set, the candidate resource being reserved by other terminal devices supporting the RAN technology supported by the first communication module and having a second RSRP measurement value greater than a second RSRP threshold, the third reserved resource being a resource on a time unit determined within the resource selection window, and the time unit determined within the resource selection window is determined according to a time unit within a resource sensing window of the terminal during which the terminal is unable to receive due to half-duplex.

The embodiments of the present application also provide a chip, and the chip may perform the relevant steps of the terminal device in the method embodiments mentioned above. The chip includes a processor and a communication interface. The processor is configured to cause the chip to:

determine a resource selection window according to a time unit triggering resource selection; and

exclude a first candidate resource from a candidate resource set corresponding to the resource selection window, wherein the first candidate resource overlaps with a first reserved resource, the first reserved resource being a resource for transmitting control information of a RAN technology supported by the second communication module.

Optionally, the first reserved resource being a resource for transmitting control information of a RAN technology supported by the second communication module comprises:

the first reserved resource being a resource, sensed by the second communication module, for transmitting control information; or

the first reserved resource being a resource, within a resource pool configured for the RAN technology supported by the second communication module, for transmitting control information.

12

Optionally, the first candidate resource overlapping with the first reserved resource comprises:
the first candidate resource overlapping with the first reserved resource, and a first RSRP measurement value of the first reserved resource being greater than an RSRP threshold.

Optionally, the first RSRP measurement value is an RSRP measurement value on a PSSCH.

Optionally, the first RSRP measurement value is an RSRP measurement value obtained after power compensation on an RSRP measurement value on a PSSCH.

Optionally, the first RSRP measurement value satisfies:

$$RSRP_{used} = \alpha\, RSRP_{PSSCH}^{LTE} + X\, dB;$$

wherein, $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain.

Optionally, the first RSRP measurement value satisfies:

$$RSRP_{used} = RSRP_{PSSCH}^{LTE} + 10\, log_{10}\left(\frac{M_{PSSCH} + 10^{\frac{3}{10}} M_{PSCCH}}{M_{PSCCH} + M_{PSSCH}}\right);$$

wherein $RSRP_{used}$ represents the first RSRP measurement value, $RSRP_{PSSCH}^{LTE}$ represents the RSRP measurement value measured on the PSSCH, $M_{PSSCH}$ represents a number of physical resource blocks PRBs occupied by the PSSCH, and $M_{PSCCH}$ represents a number of PRBs occupied by the PSCCH.

Optionally, the method further includes:
receiving indication information, the indication information indicating whether to exclude the first candidate resource.

Optionally, the first candidate resource overlaping with the first reserved resource comprises:
the first candidate resource overlapping with the first reserved resource, and a priority indicated by the control information transmitted on the first reserved resource being lower than a priority of data to be transmitted by the first communication module.

Optionally, the candidate resource set corresponding to the resource selection window is any one of the following sets:

an initialized candidate resource set; or

a candidate resource set with a third reserved resource excluded from the initialized candidate resource set, the third reserved resource being a resource on a time unit determined within the resource selection window, and the time unit determined within the resource selection window is determined according to a time unit during which the terminal device is unable to receive due to half-duplex; or

a candidate resource set with a third reserved resource and a candidate resource excluded from the initialized candidate resource set, the candidate resource being reserved by other terminal devices supporting the RAN technology supported by the first communication module and having a second RSRP measurement value greater than a second RSRP threshold, the third reserved resource being a resource on a time unit determined within the resource selection window, and the time unit determined within the resource selection window is determined according to a time unit within a resource sensing window of the terminal during which the terminal is unable to receive due to half-duplex.

It should be noted that the above chip includes at least one processor, at least one first memory, and at least one second memory, wherein the above at least one first memory and the above at least one processor are interconnected by wires, and instructions are stored in the first memory; the above at least one second memory and the above at least one processor are interconnected by wires, and data that needs to be stored in the method embodiments mentioned above is stored in the second memory.

For apparatuses or products applied to or integrated into a chip, each module included may be implemented in hardware such as circuits, or at least some of the modules may be implemented by software programs executing on a processor integrated into the chip, and the remaining (if any) of the modules may be implemented in hardware such as circuits.

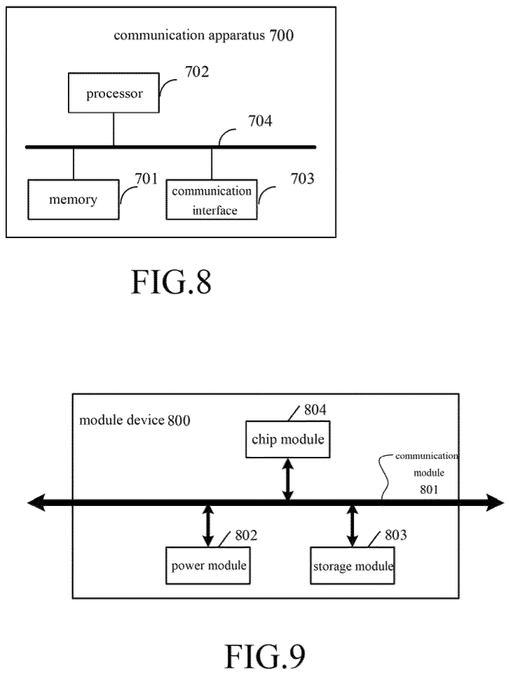

Referring to FIG. 8, FIG. 8 is another schematic structure diagram of a communication apparatus provided by an embodiment of the present application. The communication apparatus may be a terminal device or an access network device. The communication apparatus 700 may include a memory 701 and a processor 702. Optionally, it further includes a communication interface 703. The memory 701, the processor 702, and the communication interface 703 are connected via one or more communication buses 704. The communication interface 703 receives or transmits information under the control of the processor 702.

The memory 701 may include read-only memory and random access memory, and provides instructions and data to the processor 702. A part of the memory 701 may also include non-volatile random access memory.

The communication interface 703 is configured to receive or transmit data.

The processor 702 may be a Central Processing Unit (CPU), or the processor 702 may be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. The general-purpose processor may be a microprocessor, or optionally, the processor 702 may be any conventional processor, etc. Wherein:

The memory 701 is configured to store program instructions.

The processor 702 is configured to invoke the program instructions stored in the memory 701.

The processor 702 invokes the program instructions stored in the memory 701 to cause the communication apparatus 700 to perform the method performed by the terminal device or the access network device in the method embodiments mentioned above.

Referring to FIG. 9, FIG. 9 is a schematic structure diagram of a chip module provided by an embodiment of the present application. The chip module 800 may perform the relevant steps of the terminal device or the access network device in the method embodiments mentioned above, and the chip module 800 includes: a communication module 801, a power module 802, a storage module 803, and a chip module 804.

The power module 802 provides power for the chip module; the storage module 803 stores data and instructions; the communication interface 801 is configured for internal communication within the chip module, or for communication between the chip module and external devices; the chip module 804 performs the method performed by the terminal device or the access network device in the method embodiments mentioned above.

It should be noted that content not mentioned in the embodiment corresponding to FIG. 5 and the specific implementation of each step may be referred to the embodiment shown in FIG. 2 and the above content, and will not be repeated here.

An embodiment of the present application also provides a computer-readable storage medium having instructions stored therein, and when the instructions are executed on a processor, the flow of the method embodiments mentioned above is implemented.

An embodiment of the present application also provides a computer program product, and when the computer program product is executed on a processor, the flow of the method embodiments mentioned above is implemented

Regarding the various modules/units included in various apparatuses and products described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal, each module/unit included may be implemented in hardware such as circuits, different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

It should be noted that for the method embodiments mentioned above, they are described as a series of combination of actions for simplification. However, those skilled in the art should appreciate that the present application is not limited by the described sequence of actions, as some steps may be performed in other sequences or simultaneously according to the present application. Secondly, those skilled in the art should also appreciate that the embodiments described in the specification are all preferred embodiments, and not all the actions and modules involved are required by the present application.

The descriptions of the various embodiments provided in the present application may be cross-referenced, and the description of each embodiment focuses on a respective part. Any details omitted from certain embodiment are provided in the relevant descriptions of other embodiments. For the convenience and clarity of description, for example, the functions of the apparatuses and devices provided by the embodiments of the present application and the operations performed may be referenced to the related descriptions of the method embodiments of the present application. The various method and apparatus embodiments may also refer to, combine with, or quote each other.

Finally, it should be noted that: the above embodiments are only intended to illustrate the technical solutions of the present application, but not to pose limitations on them. Although detailed description of the present application has been illustrated with reference to the above embodiments, those of ordinary skill in the art should understand that they may still modify the technical solutions described in the above embodiments, or replace some or all of the technical features equivalently. Such modifications or replacements do not deviate the essence of the corresponding technical solutions from the scope of the technical solutions of the embodiments of the present application.

**Claims**

1. A method for resource exclusion, applied to a terminal device supporting a first radio access network RAN technology and a second RAN technology, the method comprising:

   determining, by the terminal device, a resource selection window according to a time unit triggering resource selection for the first RAN technology; and
   excluding, by the terminal device, a first candidate resource from a candidate resource set corresponding to the resource selection window, wherein the first candidate resource overlaps with a first reserved resource, the first reserved resource being a resource for transmitting control information of other terminals supporting the second RAN technology.

2. The method according to claim 1, where in the first reserved resource being a resource for transmitting control information of other terminals supporting the second RAN technology comprises:
   the first reserved resource being a resource for transmitting control information corresponding to a second reserved resource, and the second reserved resource being a resource reserved by other terminals supporting the second RAN technology; or the first reserved resource being a resource, within a resource pool configured for the second RAN technology, for transmitting control information.

3. The method according to claim 1 or 2, wherein the first candidate resource overlapping with the first reserved resource comprises:
   the first candidate resource overlapping with the first reserved resource, and a first Reference Signal Received Power (RSRP) measurement value of the first reserved resource being greater than an RSRP threshold.

4. The method according to claim 3, where in the first RSRP measurement value is an RSRP measurement value on a Physical Sidelink Shared Channel (PSSCH).

5. The method according to claim 3, wherein the first RSRP measurement value is an RSRP measurement value obtained after power compensation on an RSRP measurement value on a PSSCH.

6. The method according to claim 5, wherein the first RSRP measurement value satisfies:

$$RSRP_{used} = \alpha \, RSRP_{PSSCH}^{LTE} + X \, dB;$$

wherein $RSRP_{used}$ represents the first RSRP measurement value, $RSRP_{PSSCH}^{LTE}$ represents the RSRP measurement value measured on the PSSCH, $\alpha$ represents a configurable coefficient factor, and X represents a configurable compensation power gain.

7. The method according to claim 5, wherein the first RSRP measurement value satisfies:

$$RSRP_{used} = RSRP_{PSSCH}^{LTE} + 10 \, log_{10} \left( \frac{M_{PSSCH} + 10^{\frac{3}{10}} M_{PSCCH}}{M_{PSCCH} + M_{PSSCH}} \right);$$

wherein $RSRP_{used}$ represents the first RSRP measurement value, $RSRP_{PSSCH}^{LTE}$ represents the RSRP measurement value measured on the PSSCH, $M_{PSSCH}$ presents a number of Physical Resource Blocks (PRBs) occupied by the PSSCH, and $M_{PSCCH}$ represents a number of PRBs occupied by a Physical Sidelink Control Channel (PSCCH).

8. The method according to claim 1 or 2, further comprising:
receiving, by the terminal device, indication information of the first RAN technology, the indication information indicating whether to exclude the first candidate resource.

9. The method according to claim 1 or 2, wherein the first candidate resource overlapping with the first reserved resource comprises:
the first candidate resource overlapping with the first reserved resource, and a priority indicated by the control information transmitted on the first reserved resource being lower than a priority of data to be transmitted in the first RAN technology.

10. The method according to any one of claims 1 to 9, wherein the candidate resource set corresponding to the resource selection window is an initialized candidate resource set.

11. The method according to any one of claims 1 to 9, wherein the candidate resource set corresponding to the resource selection window is a candidate resource set with a third reserved resource excluded from an initialized candidate resource set, the third reserved resource being a resource on a time unit determined within the resource selection window, the time unit determined within the resource selection window being determined according to a time unit during which the terminal device is unable to receive due to half-duplex.

12. The method according to any one of claims 1 to 9, wherein the candidate resource set corresponding to the resource selection window is a candidate resource set with a third reserved resource and a candidate resource excluded from an initialized candidate resource set, the candidate resource being reserved by other terminal devices supporting the first RAN technology and having a second RSRP measurement value greater than a second RSRP threshold, the third reserved resource being a resource on a time unit determined within the resource selection window, the time unit determined within the resource selection window being determined according to a time unit within a resource sensing window of the terminal during which it is unable to receive due to half-duplex, the second RSRP measurement value being an RSRP measurement value on a PSSCH or PSCCH in the first RAN technology.

13. The method according to any one of claims 1 to 12, wherein the first RAN technology is NR, and the second RAN technology is LTE.

14. The method according to any one of claims 1 to 13, wherein the control information is PSCCH.

15. An apparatus for resource exclusion, applied to a terminal device supporting a first radio access network RAN technology and a second RAN technology, the apparatus comprising:

a determining unit for determining a resource selection window according to a time unit triggering resource selection for the first RAN technology; and
an exclusion unit for excluding a first candidate resource from a candidate resource set corresponding to the resource selection window; wherein the first candidate resource overlaps with a first reserved resource, the first reserved resource being a resource for transmitting control information of other terminals supporting the second RAN technology.

16. A chip, comprising a processor and a communication interface, the processor being configured to cause the chip to perform the method according to any one of claims 1 to 14.

17. A chip module, comprising a communication interface, a power module, a storage module, and a chip, wherein:

the power module is configured to provide power for the chip module;
the storage module is configured to store data and instructions;
the communication interface is configured for internal communication within the chip module, or for communication between the chip module and external devices; and
the chip is configured to perform the method according to any one of claims 1 to 14.

18. A communication apparatus, comprising:

one or more processors, one or more memories, and one or more transceivers;
wherein the one or more memories are configured to store computer programs, the one or more processors and the one or more transceivers are configured to execute the computer programs stored in the one or more memories to cause the communication apparatus to perform the method according to any one of claims 1 to 14.

19. A computer-readable storage medium having computer-readable instructions stored thereon, wherein the computer-readable instructions, when being executed on a communication apparatus, cause the communication apparatus to perform the method according to any one of claims 1 to 14.

20. A computer program or a computer program product comprising code or instructions, wherein the code or instructions, when being executed on a computer, cause the computer to perform the method according to any one of claims 1 to 14.

first terminal device 10

access network device 30

second terminal device 20

FIG.1

| Data3 |
| Data2 |
| Data1 |
| SCI3 |
| SCI2 |
| SCI1 |

| Data3 |
| SCI3 |
| Data2 |
| SCI2 |
| Data1 |
| SCI1 |

(a) resource pool in
a non-adjacent form

(b) resource pool in
an adjacent form

FIG.2

FIG.3

FIG.4

determining, by a first communication module of a terminal device, a resource selection window according to a time unit triggering resource selection — S501

excluding, by the first communication module of the terminal device, a first candidate resource from a candidate resource set corresponding to the resource selection window — S502

# FIG.5

triggering resource selection/reselection

UE1

for transmission
of data information

periodic reservation

periodic reservation

UE2  Data1 — — — — → Data2 — — — — → Data3

for transmission
of control information

SCI1          SCI2          SCI3

$n-T_0$  resource sensing window  $n-T_{proc,0}$  n  $n+T_1$  resource selection window  $n+T_2$

t

# FIG.6

communication apparatus 600

601

first communication module

6011

determination unit

6012

exclusion unit

6013

transceiver unit

602

second communication module

# FIG.7

21

communication apparatus 700

702

processor

704

701

memory

703

communication interface

FIG.8

module device 800

804

chip module

communication module 801

802

power module

803

storage module

FIG.9

## INTERNATIONAL SEARCH REPORT

| International application No. |
| --- |
| **PCT/CN2024/085825** |

**A.    CLASSIFICATION OF SUBJECT MATTER**

H04W 28/26(2009.01)i

According to International Patent Classification (IPC) or to both national classification and IPC

**B.    FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT: WPABS; WPABSC; ENTXT; ENTXTC; CJFD; IEEE; 3GPP; CNKI: 侧行, 资源, 排除, 时隙, 子帧, 窗, 选择, 重叠, 控制信息, V2X, V2V, sidelink, resource, exclusion, LTE, NR, slot, subframe, window, select, overlap, control information, RSRP, PSSCH, PSCCH, PRB

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2020191769 A1 (GUANGDONG OPPO MOBILE TELECOMMUNICATIONS CORP., LTD.) 01 October 2020 (2020-10-01)<br>description, pages 1-12, and claims 1-33 | 1-6, 8-20 |
| Y | CN 112425251 A (QUALCOMM INC.) 26 February 2021 (2021-02-26)<br>description, paragraphs [0002]-[0082] | 1-6, 8-20 |
| A | CN 114424656 A (GUANGDONG OPPO MOBILE TELECOMMUNICATIONS CO., LTD.) 29 April 2022 (2022-04-29)<br>entire document | 1-20 |
| A | CN 111132082 A (TELECOMMUNICATIONS SCIENCE AND TECHNOLOGY RESEARCH INSTITUTE CO., LTD.) 08 May 2020 (2020-05-08)<br>entire document | 1-20 |
| A | WO 2020167837 A1 (APPLE INC.) 20 August 2020 (2020-08-20)<br>entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 July 2024** | **16 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 694 321 A1

**INTERNATIONAL SEARCH REPORT**
Information on patent family members

International application No.

**PCT/CN2024/085825**

| Patent document cited in search report | | | Publication date (day/month/year) | Patent family member(s) | | | Publication date (day/month/year) |
|---|---|---|---|---|---|---|---|
| WO | 2020191769 | A1 | 01 October 2020 | CN | 112997551 | A | 18 June 2021 |
| CN | 112425251 | A | 26 February 2021 | US | 2020029202 | A1 | 23 January 2020 |
| | | | | US | 11006269 | B2 | 11 May 2021 |
| | | | | US | 2021250756 | A1 | 12 August 2021 |
| | | | | WO | 2020018952 | A1 | 23 January 2020 |
| | | | | EP | 3824692 | A1 | 26 May 2021 |
| | | | | EP | 3824692 | B1 | 17 August 2022 |
| CN | 114424656 | A | 29 April 2022 | WO | 2021134863 | A1 | 08 July 2021 |
| | | | | WO | 2021134283 | A1 | 08 July 2021 |
| CN | 111132082 | A | 08 May 2020 | JP | 2022509342 | A | 20 January 2022 |
| | | | | JP | 7328342 | B2 | 16 August 2023 |
| | | | | US | 2021314929 | A1 | 07 October 2021 |
| | | | | US | 11259295 | B2 | 22 February 2022 |
| | | | | EP | 3876616 | A1 | 08 September 2021 |
| | | | | EP | 3876616 | B1 | 10 April 2024 |
| | | | | WO | 2020088593 | A1 | 07 May 2020 |
| | | | | KR | 20210075155 | A | 22 June 2021 |
| WO | 2020167837 | A1 | 20 August 2020 | US | 2022086843 | A1 | 17 March 2022 |
| | | | | JP | 2022520365 | A | 30 March 2022 |
| | | | | JP | 7206403 | B2 | 17 January 2023 |
| | | | | JP | 2023052199 | A | 11 April 2023 |
| | | | | JP | 7463568 | B2 | 08 April 2024 |

**EP 4 694 321 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103484640